# EUROPEAN PATENT SPECIFICATION

(11) **EP 0 386 192 B1**
(45) Date of publication and mention of the grant of the patent: **16.03.1994**
(21) Application number: 89908791.0
(22) Date of filing: 27.07.1989
(51) Int. Cl.: C09D 5/08, B05D 7/14

(54) **COMPOSITIONS CONTAINING THERMOPLASTIC ELASTOMERS AND NON-CARBONATED METAL-CONTAINING COMPLEXES**
THERMOPLASTISCHE ELASTOMERE UND NICHTCARBONHALTIGE, METALLHALTIGE KOMPLEXE ENTHALTENDE ZUSAMMENSETZUNGEN
COMPOSITIONS CONTENANT DES ELASTOMERES THERMOPLASTIQUES ET DES COMPLEXES A TENEUR EN METAL NON CARBONATES

(30) Priority: 02.09.1988 US 240161
(43) Date of publication of application: 12.09.1990
(73) Proprietor: The Lubrizol Corporation, Wickliffe, Ohio 44092 (US)
(72) Inventor: ZEITZ, James B., Chesterland, OH 44026 (US); HIGGINS, William A., Gates Mills, OH 44040 (US)
(74) Representative: Crisp, David Norman
(86) International application number: US8903254
(87) International publication number: WO9002778

(56) References cited:
- EP-A- 0 108 953
- US-A- 4 057 529
- US-A- 4 253 976
- US-A- 4 260 500
- US-A- 4 264 363
- Dialog Information Services, File 351, World Patent Index 81-89, Dialog accession no. 88-202093/29, Bridgestone Tire KK: "Rubber compsn. for coating steel - obtd. by blending divalent metal complex salt of e.a. cobalt and 2 carboxvlic acids into natural and/or synthetic polyvisoprene rubber"; & JP-A-63 139 970

## Description

### FIELD OF THE INVENTION

This invention relates to compositions comprising an elastomer and a non-carbonated hydrated metal-containing complex. These compositions are particularly useful as coating compositions for protecting metal from corrosion. Methods of coating metal surfaces and coated metal surfaces are also disclosed.

### BACKGROUND OF THE INVENTION

Over the years, numerous efforts have been made to protect metal from corrosion. In the automotive industry, undercoating comprising asphaltic mastics have been used to protect automobile underbodies. Such coatings do not have adequate durability over the long term. They fail because, on hardening, and as they age, they tend to crack and lose adhesion to the metal substrate, exposing the metal to the corrosive environment.

Numerous other compositions for coating metals to enhance their appearance and/or provide protection against corrosion are known in the art. One type of composition useful for coating metals is a hot-melt coating composition comprising a non-carbonated magnesium-containing complex. Magnesium-containing complexes and coating compositions comprising these complexes are described in numerous patents, particularly those of Forsberg, for example, U.S. Patents
4,094,801
4,253,976
4,260,500
4,322,478
4,322,479 and
Reissue 32,235.

A rust-inhibiting composition comprising a complex of a metal having a valence of from 1-4 and a drying oil is disclosed in U.S. 3,925,087.

U.S. Patent 4,150,192 discloses a sprayable hot-melt rust inhibitor which comprises a petroleum sulfonate complex comprising a calcium or magnesium sulfonate in a non-volatile diluent oil, and which complex further optionally comprises calcium or magnesium carbonates and oxidized petrolatum; a microcrystalline wax; a particulate filler consisting of various inorganic metal-containing materials; and a hydrocarbon derived thermoplastic resin containing carbon-to-carbon unsaturation therein.

Higgins et al, in U.S. 4,728,578, teaches a modified non-Newtonian colloidal disperse system comprising a mixture of at least one metal-containing non-Newtonian colloidal disperse system and at least one hydrogenated block copolymer of a vinyl aromatic monomer and an aliphatic conjugated diene.

Many of the coatings described in the above-mentioned patents provide improved performance compared to coatings derived from asphalt mastics. However, they often, under certain circumstances, still fail to provide durable, long-lasting coatings.

Often the problem of durability can be resolved by preparing coating materials that are relatively soft at ambient temperatures. Such soft coatings, when left undisturbed except for exposure to the atmosphere or to a corrosive environment are generally fairly durable and long-lasting. A problem arises when parts coated with such soft coatings are handled. Such soft coatings will not withstand handling by mechanical or manual means. When handled, such a coating material tends to transfer, creating an untidy and often hazardous environment or interferes with the operation of mechanical devices coming into contact with the coating material. Another serious problem is the loss of coating material results in reduced protection for the coated metal wherever the coating is removed from the coated object.

The problem of poor handling characteristics can be overcome by adding certain materials such as crystalline waxes to the hot-melt rustproofing composition. Unfortunately, improved handling characteristics are often obtained at the expense of other necessary properties. Frequently, harder coatings so obtained, while displaying acceptable handling properties, do not possess the necessary durability characteristics. That is, when a part coated with such a material is exposed to sharp impacts such as being struck by road debris, or to an abrasive environment, the coating will frequently crack with the attendant loss of coating material. Illustrative of such an environment is an automobile underbody exposed to normal winter conditions in a northern climate. Under such conditions, the automobile underbody is exposed to water, snow, ice, corrosive materials applied to the road to improve traction, and the like.

Accordingly, it is desirable to provide a coating material which displays good corrosion inhibiting properties, which is not readily damaged or transferred when handled and which coating material has adequate toughness to withstand exposure to impact and abrasive environments.

According to one aspect of the present invention there is provided a hot melt composition comprising
(A) a thermoplastic elastomer; and
(B) at least one non-carbonated hydrated metal-containing complex of:
   (B-1) at least one metal-containing reagent; and
   (B-2) at least one acidic organic reagent or an ester or an alkali metal or alkaline earth metal salt thereof; wherein (B-1) is in stoichiometric excess to the acidic organic reagent.

Other embodiments of this invention include methods for coating metal objects with the compositions of the invention and the coated metal objects.

Thus, we have found it possible to provide novel hot-melt compositions.

We have further found it possible to provide methods for coating metal objects with the compositions of this invention;
metal objects coated with the compositions of this invention;
a hot-melt composition useful for coating metals to protect the metal from corrosion which coating is not readily damaged or transferred when the coated metal object is handled;
a hot-melt composition useful for coating metals to protect the metal from corrosion, which coating resists cracking or loss of adhesion when subjected to impact or an abrasive environment;
a hot-melt composition which has improved low-temperature durability and adhesion properties when said composition is used to coat a metal object; and
metal objects protected against corrosion.

### DETAILED DESCRIPTION OF THE PREFERRED EMBODIMENTS

As mentioned hereinabove, the present invention relates to a hot melt composition comprising (A) a thermoplastic elastomer; and (B) at least one non-carbonated hydrated metal-containing complex of (B-1) at least one metal-containing reagent; and (B-2) at least one acidic organic reagent or an ester or an alkali metal or alkaline earth metal salt thereof; wherein (B-1) is in stoichiometric excess to the acid organic reagent.

Several terms are used herein, which terms are defined hereinbelow. The term "hydrocarbyl" is used herein to include substantially hydrocarbyl groups (for example, substantially hydrocarbyloxy, etc.), as well as purely hydrocarbyl groups. Such groups may also be described as "hydrocarbon" groups, and may be used interchangeably unless the context clearly dictates otherwise. The description of groups as being substantially hydrocarbyl means that they contain no non-hydrocarbyl substituents or non-carbon atoms which significantly affect the hydrocarbyl characteristics or properties of such groups relevant to their uses as described herein. Substituents which do not significantly alter the hydrocarbyl characteristics or properties of the hydrocarbyl group containing components of this invention will readily occur to those skilled in the art.

The term "hydrocarbyl" is not intended to infer any particular structure or valence. Thus, for example, a "hydrocarbyl" group may be alkyl, alkylene, aryl, aralkyl, alkaryl, etc. The nature of particular hydrocarbyl groups referred to herein will be apparent to one of ordinary skill in the art.

The term "elastomer" is intended to define a substance that can be stretched at room temperature to at least twice its original length, and after having been stretched and the stress removed, returns with force to approximately its original length in a short time.

A material which is "thermoplastic" is defined as having the property of becoming soft when exposed to heat and returning to its original condition when cooled to room temperature. Thermoplastic is distinguished from thermoset in that a thermoset material solidifies or "sets" irreversibly when heated.

A hot-melt material is a solid which quickly melts upon heating, and then sets to a firm consistency on cooling. This is distinguished from a material which may be present in a solvent and which does not solidify or set until a substantial amount of solvent has evaporated.

Some of the components useful in preparing the compositions of this invention, as well as some of the reactants employed in the preparation of the components, are described as oil soluble or dispersible. By oil soluble or dispersible is meant that an amount effective to provide the desired concentration can be dissolved, dispersed or suspended in oil. Usually, this means that the material can be dissolved to the extent of at least about 0.001% by weight in oil.

Other terms will be defined as needed throughout the Detailed Description of this invention.

### (A) The Elastomer

Elastomers useful in the compositions of this invention are substances that can be stretched at room temperature to at least twice the original length, and after having been stretched and the stress removed, return to approximately the original length in a short time. This is the definition which appears in ASTM Special Technical Publication Number 184 entitled "Glossary of Terms Relating to Rubber and Rubber-like Materials", published by The American Society for Testing Materials (1956). These elastomers include materials falling in the general class of natural and synthetic rubbers.

Numerous elastomers are known in the art including acrylic elastomers, diene elastomers such as polyisoprene, chlorosulfonated polyethylene, fluorinated elastomers, natural rubber and synthetic rubbers such as butyl rubber, ethylene-propylene rubber, neoprene, nitrile rubber and styrene-butadiene rubber, copolyether-ester elastomers, olefin-ester elastomers, styrenic elastomers, olefin copolymer elastomers, diene-olefin elastomers, copolyester elastomers, polyurethane elastomers, polyether elastomers, polyester-amide elastomers, olefin-maleic anhydride elastomers, styrene-maleic anhydride elastomers, and alloy elastomers comprising at least one member of the above group of elastomers along with at least one other member of the above-listed group or with another polymer, or alloy elastomers comprising a combination of polymers which as an alloy display elastomeric properties. Numerous synthetic rubbers are known in the art including those described at pages 450-451, Volume 8 of Kirk-Othmer, "Encyclopedia of Chemical Technology", 3rd Edition, John Wiley & Sons (1979) and at page 403 of G. G. Hawley, "The Condensed Chemical Dictionary", 10th Edition, and in numerous other publications. These publications are hereby expressly incorporated by reference herein for relevant disclosures contained therein.

Thermoplastic elastomers are polymeric structures that Soften or melt at elevated temperatures, but, when cooled, recover the physical and chemical properties of the original resin. Thermoplastic elastomers have both the properties of thermoplastic resins and elastomers as defined hereinabove. That is, at normal temperatures they can be stretched with good elastic recovery. Since they soften at higher temperatures, they are useful in hot-melt compositions. When cooled, they recover their original physical properties.

Thermoplastic elastomers possess a physical network obtained from two mutually incompatible phases which coexist by chemical bonding in a specific relationship allowing stiff molecular segments to serve as physical cross-links. A soft segment with a glass transition temperature (T_{g}) below room temperature is chemically linked at either end to a hard segment having a T_{g} above room temperature. As mentioned hereinabove, thermoplastic elastomers are particularly useful in the compositions of this invention, especially when the composition of this invention is intended for use as a hot-melt coating composition which can be readily handled, either manually or mechanically, and which coating composition displays improved impact and abrasion resistance, particularly at low temperatures. Numerous thermoplastic elastomers are known. Exemplary thermoplastic elastomers include ethylene-vinyl acetate copolymers such as Elvax 210 from DuPont, various styrenic elastomers such as styrene-butadiene, styrene-isoprene, styrene-co(ethylene-butylene) block terpolymers such as those marketed by Shell Chemical Company under the trade name Kraton® and polyisoprene-isobutylene such as Polysarbutyl 402 from Polysar Company.

Particularly useful are elastomers wherein the elastomer comprises a block copolymer. For purposes of this invention, a block polymer is a high molecular weight polymer whose molecules are made up of alternating sections of one chemical composition separated by sections of a different chemical nature, or by a coupling group of low molecular weight. Often, the elastomer comprises at least three polymeric blocks. A preferred elastomer comprises a styrenic elastomer wherein said styrenic elastomer is a block copolymer containing polymeric styrene or polymeric alpha-methyl styrene blocks separated by polymeric diene or polymeric lower-olefin blocks. Preferred styrenic elastomers are those comprising polymeric styrene blocks and polymeric conjugated diene blocks. Another preferred styrenic elastomer is one comprising polymeric styrene blocks and co(polyethylene-polybutylene) blocks. Another preferred elastomer comprises a diene-olefin elastomer wherein the elastomer comprises polymeric isoprene and polymeric isobutylene blocks. Especially preferred is wherein the elastomer comprises a polymer substantially free of olefinic unsaturation. By substantially free of olefinic unsaturation means that the polymer contains less than 5 percent, more preferably less than 1 percent of carbon-carbon bonding as olefinic unsaturated bonds. Preferably, the elastomer is free of olefinic unsaturation. For purposes of this invention, aromatic unsaturation, that is, unsaturation appearing in, for example, a benzene ring or in naphthalene rings is not considered olefinic unsaturation. When it is desired to reduce olefinic unsaturation, this can be accomplished by means well known in the art, such as hydrogenation, for example, hydrogenation employing hydrogenation catalysts.

Particularly preferred elastomers are those wherein the elastomer comprises a block copolymer wherein the block copolymer comprises hard and soft regions. The hard and soft regions generally occur in single polymer molecules although "alloys" comprising mixtures of polymers are known which display properties such as those possessed by the above-described polymers. Basically, these preferred elastomers comprise hard, glassy or crystalline domains existing with soft domains either in a triblock or multiblock copolymer, or in a partially miscible blend.

### (B) The Non-carbonated Hydrated Metal-containing Complex

Hydrated metal-containing complexes (B) useful in this invention may be neutral or overbased materials, which terms are described in greater detail hereinbelow. The complexes (B) may be salts, coordination complexes comprising a central atom or ion and organic ligands, or may be overbased complexes as described hereinbelow. Preferably, they are overbased complexes. These materials are hydrated; that is, they include molecules of water incorporated into the metal complex. Usually the water is present associated with some or all of the metal in (B).

The terms "neutral" and "normal" as applied to metal salts herein refer to metal salts of organic acids wherein the acid is reacted with a stoichiometric amount of a metal base.

The terms "overbased", "superbased", and "hyperbased", are terms of art which are generic to well-known classes of metal-containing materials. Overbased materials have also been referred to as "complexes", "metal complexes", "high-metal containing salts", and the like. All of these terms may be used interchangeably in this specification and the appended claims. Overbased materials are characterized by a metal content in excess of that which would be present according to the stoichiometry of the metal and the particular organic compound reacted with the metal, e.g., a carboxylic or sulfonic acid. Thus, if a monosulfonic acid, 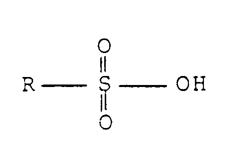
is neutralized with a basic metal compound, e.g., magnesium oxide, the "normal" metal salt produced will contain one equivalent of magnesium for each equivalent of acid, i.e., 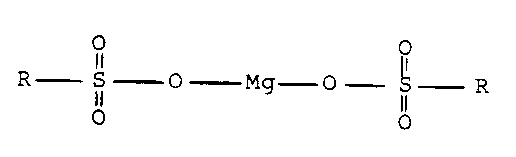
However, as is well known in the art, various processes are available which result in a product containing more than the stoichiometric amount of metal. These products are referred to herein as overbased materials. Following these procedures, an acid or an alkali or alkaline earth metal salt thereof can be reacted with a metal base and the product will contain an amount of metal in excess of that necessary to neutralize the acid, for example, 4.5 times as much metal as present in the normal salt which is a metal excess of 3.5 equivalents. The actual stoichiometric excess of metal can vary considerably, for example, from about 0.1 equivalent to about 30 or more equivalents depending on the reactions, the process conditions, and the like. The overbased materials useful in the compositions of the invention will generally contain from about 3.5 to about 40 or more equivalents of metal for each equivalent of material which is overbased.

In the present specification and claims the term "overbased" is used to designate materials containing a stoichiometric excess of metal and is, therefore, inclusive of those materials which have been referred to in the art as overbased, superbased, hyperbased, etc., as discussed supra.

The terminology "metal ratio" is used in the prior art and herein to designate the ratio of the total chemical equivalents of the metal in the overbased material (e.g., a metal sulfonate, carboxylate, phosphate or phenate) to the chemical equivalents of the metal in the product which would be expected to result in the reaction between the organic material to be overbased (e.g., sulfonic, carboxylic, or phosphorus acid or a phenol) and the metal-containing reactant (e.g., hydroxide, barium oxide, etc.) according to the known chemical reactivity and stoichiometry of the two reactants. Thus, in the normal magnesium sulfonate discussed above, the metal ratio is one, and in the overbased sulfonate, the metal ratio is 4.5. Obviously, if there is present in the material to be overbased more than one compound capable of reacting with the metal, the "metal ratio" of the product will depend upon whether the number of equivalents of metal in the overbased product is compared to the number of equivalents expected to be present for a given single component or a combination of all such components.

### (B-1) The Metal-containing Reagent

The metal-containing reagent (B-1) is selected from those reagents which, when reacted with component (B-2), described hereinbelow, will provide non-carbonated hydrated metal-containing complexes when subjected to reaction conditions described in greater detail hereinbelow. Reagents (B-1) include the oxides, hydrated oxides, hydroxides, alkoxides and halides of alkaline earth metals, aluminum, titanium, zinc and iron. Reactive species of boron such as boric acid (H₃BO₃) and B₂O₃, etc. and of silicon, such as SiCl₄, are also considered useful and are considered "metal-containing reagents" for the purposes of this invention. Preferred metal-containing reagents are those containing alkaline earth metals. Most preferred are those containing magnesium.

It is important that component (B-1) be reactive with component (B-2) to form the non-carbonated hydrated overbased metal-containing complexes used in this invention. Such reagents will be apparent to those of ordinary skill in the art. To illustrate this requirement, one may consider magnesium oxide as a particular example. Magnesium oxide exists in an inactive (dead-burned) and a hydratable "reactive" form, also known as "light" magnesium oxide, and the latter is the one which is useful in this invention. Mixtures of the "reactive" form with minor amounts of the "dead-burned" form may also be used. Hydrated metal oxides, for the purpose of this invention, are metal oxides which are associated with water in an amount less than that required for conversion to the metal hydroxide. As so defined, "hydrated metal oxides" may be mixtures of various proportions of metal oxide and metal hydroxide and its exact chemical nature is not critical to this invention. Typically, the amount of water present in "hydrated metal oxide" is at least about 0.7 mole per mole of the oxide.

The metal alkoxides, especially the lower alkoxides (i.e., those in which the alkyl groups contain 7 carbon atoms or less) are equivalent to metal oxides and hydroxides for the purpose of this invention; they are hydrolyzed by water to metal hydroxide under the conditions described hereinafter.

The equivalent weight of component (B-1) is its molecular weight divided by the valence of the metal. For example, for magnesium oxide, the equivalent weight is one-half its molecular weight, since magnesium is a divalent element.

### (B-2) The Acidic Organic Reagent or Ester or Salt Thereof

Reactant (B-2) is at least one acidic organic reagent or an ester of an alkali metal or alkaline earth metal salt thereof.

The metal salts are usually neutral metal salts of various organic acidic compounds such as phosphorus acids, thiophosphorus acids, sulfur acids, carboxylic acids, thiocarboxylic acids, phenols and the like. Such acids and the salts prepared therefrom are described in greater detail hereinafter and in U.S. Reissue Patent 32,235, which is hereby incorporated by reference. The preparation of neutral metal salts of various organic acids is well known in the art, and many neutral metal salts are available commercially. Examples include neutral magnesium and calcium mahogany sulfonate, neutral sodium and calcium naphthenates and dialkyl-substituted naphthenates, etc.

Reactant (B-2) may also be an organic acidic compound. Among suitable acidic compounds are the carboxylic and sulfonic acids. These acids include many of those known to be susceptible to overbasing and especially many of those disclosed in a number of U.S. patent numbers such as 2,616,904; 2,695,910; 3,312,618; 3,746,643; 3,764,533; 3,629,109 and the aforementioned Reissue patent 32,235. These patents are incorporated by reference herein for the disclosure of suitable acidic reagents. Phosphorus acids are also useful as component (B-2). Such phosphorus acids include trivalent and pentavalent acids, e.g., organo phosphoric, phosphonic or phosphinic acids, or thioanalogs of any of these. Useful phosphorus acids are described in the aforementioned U.S. Reissue number 32,235 which is expressly incorporated herein by reference for relevant disclosures in this regard.

Also useful as component (B-2) are esters of the acids previously described. The suitable esters include those with monohydric alcohols and polyhydric alcohols. When an ester is used as component (B-2), it is converted to the metal salt of the free acid during the reaction with component (B-1) and water. Useful esters are described in U.S. Reissue patent 32,235.

The preferred compounds for use as reactant (B-2) are the above-described sulfonic and carboxylic acids, especially those having an equivalent weight of about 300-500. The sulfonic acids are most often used, and a particular preference is expressed for alkyl aromatic sulfonic acids and more particularly for alkyl benzene sulfonic acids.

Mixtures of the above-described compounds are contemplated for use in this invention. Particularly preferred are mixtures of metal complexes of alkyl benzene sulfonic acids with fatty acids and with carboxylic acids formed by oxidation of hydrocarbons such as petrolatum. Accordingly, mixtures of the various reactants may also be used in preparing mixtures useful in the compositions of this invention.

A preferred characteristic of component (B) is that it is oleophilic. This means it is soluble or at least stably dispersible (as defined herein) in oil or similar non-polar organic liquids such as hexane, Stoddard Solvent, toluene and the like. While component (B) need not be oil-soluble, it is preferably oil-soluble for the purpose of this invention. Likewise, reactant (B-2) need not be oil-soluble. Oil-soluble sulfonic and carboxylic acids, and phosphorus acids and salts and esters thereof are preferred for the purpose of this invention.

### Preparation of the Non-carbonated Hydrated Metal-containing Complex (B)

The metal-containing complexes of this invention are prepared by merely blending the components described hereinabove and heating the resulting blend at a temperature above about 30°C, often within the range of from 40°C to about 120°C. A third component (B-3), water, is present if necessary to convert a substantial portion of component (B-1) to metal hydroxide or hydrated metal oxide. The amount of water present, if any, is at least sufficient to hydrate a substantial proportion of component (B-1) calculated as metal oxide. In most cases, it is necessary that water be present in the reaction mixture. When water is present, it is important that the water remain in the blend during substantially the entire period of preparation of the metal-containing complex, and the maximum temperature thereof should be adjusted accordingly. Said water may be present in the liquid or vapor state, i.e., as liquid water or as steam. The temperature of the reaction during preparation of the metal-containing complexes will generally range from about 30°C up to the decomposition temperature of any of the reactants. It is generally found that when the reaction is conducted at atmospheric pressure, the preparation is conveniently carried out at temperatures ranging between 30-125°C. At higher temperatures, superatmospheric pressure is usually necessary. Most often, a maximum temperature of about 100°C is convenient.

Component (B) may also comprise an additional component (B-4). Materials useful as component (B-4) include substantially inert, normally liquid organic diluents. The term "substantially inert" as used herein is intended to mean that the diluent is inert to chemical or physical change under the conditions in which it is used so as not to materially interfere in an adverse manner with the preparation, storage, blending and/or functioning of the metal-containing complex in the context of its intended use. For example, small amounts of a diluent can undergo minimal reaction or degradation, which while technically discernable, would not be sufficient to deter the practical worker of ordinary skill in the art from making and using the invention for its intended purposes.

Component (B-4) may also be a solid material including crystalline waxes and non-crystalline waxes. Such solid materials particularly include hydrocarbon waxes, including natural hydrocarbon waxes such as petrolatum, paraffin and olefin waxes and synthetic hydrocarbon waxes such as polyethylene and other polyolefins. Also contemplated is the use of other waxy materials such as waxy alcohols such as C₂₀₋₄₀ aliphatic alcohols. Resins other than the elastomers (A) also may be used.

Component (B-4) may also comprise mixtures of any of the above ingredients. Component (B-4) may be incorporated into component (B) during formation of component (B) from its individual reactants or may be added after component (B) has already been formed. In another embodiment, component (B-4) may be added as a separate ingredient when combining components (A) and (B). More often, component (B-4) serves as a diluent, organic carrier or solubilizing agent for reactant (B-2) during preparation of component (B). In this case, the temperature of the preparation of the metal-containing complex (B) may be controlled to some extent by the nature of component (B-4). That is, if component (B-4) is a low boiling material such a naphtha, hexane, etc., the reaction temperature will normally tend to be directed towards the lower end of the above-stated ranges. The temperature may be somewhat higher (e.g., about 95-150°C) when component (B-4) is entirely or predominantly a solid at ambient temperature.

The order of addition of the various components is not critical. It is often convenient to first combine components (B-1) and (B-2) and, if used, component (B-4) and subsequently to add component (B-3), water, either all at once or incrementally. It is also found convenient to prepare an initial mixture containing only a relatively small proportion of component (B-1) (e.g., about 5-10% of the total amount thereof) and to add the remainder at a later stage, typically during or after the addition of water, when water is used. The hydration reaction is often exothermic. Accordingly, water is usually added over a period of time to reactants B-1 and B-2.

The metal-containing complexes of this invention, when prepared as described herein, are often conveniently obtained as thickened compositions, i.e., viscous liquids or heterogeneous dispersions in the form of greases or gels. When component (B-4) is predominantly solid, a "hot-melt" material may be obtained.

A method which is frequently advantageous for incorporating relatively large amounts of metal while making possible the formation of a homogeneous solution or dispersion in mineral oil or the like is to prepare the complex in the presence of ammonium hydroxide, which may be prepared from ammonia and the water present as component (B-3). The amount of ammonium hydroxide required is small, generally less than about 10% by weight based on the water present. Insoluble materials can then be removed by diluting with a non-polar volatile organic liquid such as hexane or naphtha, centrifuging, and stripping the volatile liquid, or by equivalent means.

Another method for clarifying the metal complex for use in mineral oil, which may be employed in addition to or in place of preparation in the presence of ammonium hydroxide, is to add water or an acidic or basic reagent after preparation of the complex. The acidic or basic reagent may be organic or inorganic; suitable ones include sodium hydroxide, potassium hydroxide, ammonium hydroxide, triethanolamine; tartaric acid and citric acid. The amount of water or acidic or basic reagent is generally less than about 10% by weight of the magnesium complex system.

The molecular structures of the metal complexes of this invention are not known and are not a critical aspect of the invention. The magnesium complexes are, in general, most conveniently defined in terms of the method for their preparation.

The following examples illustrate preparation of non-carbonated hydrated metal-containing complexes of this invention.

### Example 1

A blend is prepared of 135 parts of magnesium oxide and 600 parts of an alkylbenzenesulfonic acid having an equivalent weight of about 385, and containing about 24% unsulfonated alkylbenzene During blending, an exothermic reaction takes place which causes the temperature to rise to 57°C. The mixture is stirred for one-half hour and then 50 parts of water is added. Upon heating at 95°C for one hour, the desired magnesium oxide-sulfonate complex is obtained as a firm gel containing 9.07% magnesium.

### Example 2

Magnesium oxide, 600 parts, is added to a solution in 478 parts of Stoddard Solvent and 244 parts of mineral oil and 308 parts of an alkylbenezenesulfonic acid having an equivalent weight of about 430 and containing about 22% unsulfonated alkylbenzene. Water, 381 parts, is added and the mixture is heated under reflux for 15 minutes. It is then cooled to room temperature, yielding the desired magnesium oxide-sulfonate complex in the form of a gel.

### Example 3

A mixture of 204 parts of the alkylbenzenesulfonic acid of Example 1, 88 parts of mineral oil and 515 parts of Stoddard Solvent is prepared, and 320 parts of magnesium oxide is added, followed by 420 parts of water. The mixture is heated at 95-100°C, with stirring, until gelation occurs. The excess water (about 300 parts) is removed by azeotropic distillation to yield the desired magnesium oxide-sulfonate gel.

### Example 4

A mixture is prepared of 1106 parts of water, 54 parts of magnesium oxide, 425 parts of the alkylbenzenesulfonic acid of Example 2, 495 parts of mineral oil and 856 parts of Stoddard Solvent. An additional 781 parts of magnesium oxide is then added and the mixture is slowly heated to 52-55°C. There is then added 30 parts of tetrapropenyl succinic acid and 37 parts of a black pigment. Upon screening and cooling, the desired composition containing the magnesium oxide-sulfonate gel is obtained.

### Example 5

A blend of 600 parts of the alkylbenzenesulfonic acid of Example 1 and 225 parts of magnesium oxide is prepared and heated for 2 hours at 60-65°C. There is then added, over one hour, a solution of 10 parts of 30% ammonium hydroxide and 75 parts of water. The mixture is heated for 3 hours at 60-65°C, and then an additional 10 parts of 30% ammonium hydroxide solution is added over 5 minutes. Upon heating for 2 more hours at 60-65°C and cooling, the desired magnesium oxide-sulfonate complex is obtained as a dark brown gel.

Following the procedure of Example 1 and replacing magnesium oxide with an equivalent amount of metal-containing reagent (B-1), other non-carbonated, hydrated metal-containing complexes are obtained. Exemplary reagents (B-1) are illustrated in the following Table:

| Example | Reagent (B-1) |
|---|---|
| 6 | Fe₂O₃ |
| 7 | Cu₂O |
| 8 | CaO |
| 9 | ZnO |
| 10 | Al(OH)₃ |

### Example 11

A neutral sodium sulfonate is prepared by reacting the alkylbenzenesulfonic acid of Example 1 with an equivalent amount of sodium hydroxide and then drying the resulting product. To this sodium sulfonate is added an equivalent amount of SiCl₄ dropwise, with stirring. The silicon-containing composition is purified by washing with cold water.

### Example 12

A reactor equipped with a stirrer, temperature monitor, heating means and cooling means is charged with 85 parts of a paraffin wax (R3635) supplied by Moore & Munger Marketing, Sarnia, Ontario, Canada, 78 parts of a blend of linear and branched C₂₀₋₃₂ alcohols and C₂₄₋₄₀ hydrocarbons (EPAL C₂₀₊ alcohol, Ethyl) 83 parts of a synthetic high melting wax consisting of a mixture of saturated straight chain hydrocarbons having an average molecular weight of 750 (H-1 Paraflint, Moore & Munger, Inc), 44 parts of a thermoplastic resin from polymerized mixed olefins and having an I₂ number between 75-85 (Super Sta-Tac 100, Reichold Chemical), 7.0 parts of carbon black, 3.5 parts of a hindered phenol (Ciba-Geigy) and 25 parts of mineral oil. The batch is maintained at 95-99°C during addition of the above ingredients. A nitrogen blanket is maintained throughout the reaction process. Magnesium oxide, 15 parts is added followed by mixing for 0.25 hours, followed by the addition of 49 parts of a mixture of alkylbenzenesulfonic acids. The batch is mixed for 0.5 hours at 95°C, followed by the addition of 132 parts of magnesium oxide and mixing for one additional hour. Via subline, 27 parts of water is added over one hour. The reaction is exothermic and cooling is needed to maintain 95-99°C. Next, 126 parts of the mixture of alkylbenznesulfonic acids is added, the materials are mixed for 0.5 hours followed by the addition via subline of 23 parts of water over 1.0 hours. The reaction is slightly exothermic. The batch is mixed for one hour and then is blown with nitrogen at an increased rate to dry. The residue is filtered. The filtrate is the desired product.

### Example 13

A reaction vessel is charged with 63 parts of "Epal 20+", a solid mixture consisting predominantly of C₂₀₋₃₂ linear and branched aliphatic alcohols and available from Ethyl Corporation; 83 parts of "Factowax R-143", a paraffin wax available from Standard Oil Company (Ohio) and melting at about 62°C; and 83 parts of "Bareco Polywax 655", a polyethylene synthetic wax manufactured by Petrolite Corp. and melting at about 102°C. The mixture is melted and 21 parts of magnesium oxide is added. As the mixture is agitated at 96-99°C, 235 parts of the alkylbenzenesulfonic acid of Example 2 is added. Following the sulfonic acid addition, an additional 185 parts of magnesium oxide is added at 96-99°C. Mixing is continued at that temperature for 2 hours and then 69 parts of water is added over 2-1/2 hours at 99-102°C. An additional 76 parts of alkylbenzenesulfonic acid is added at 96-99°C and mixing is continued for 1-1/2 hours after which the mixture is heated to 143-149°C for 3 hours and blown with nitrogen to remove volatiles by distillation. The residue is the desired solid magnesium oxide-sulfonate complex.

### Preparation of the Compositions Comprising the Elastomer and the Non-carbonated Hydrated Metal-containing Complex

The compositions of the present invention can be prepared using standard mixing techniques. The specific means by which the elastomer (A) is incorporated into component (B) is not a critical feature of this invention. For example, since component (B) is a liquid or semi-liquid (i.e., gel), it may be used as a carrier for component (A). Component (A) is generally a solid at room temperature. However, it may be dissolved or dispersed in a solvent or other diluent, including any of the materials described as component (B-4) to form a semi-solid or liquid material. Such a semi-solid or liquid material is readily mixed with component (B). Alternatively, component (A) may be used in its solid form. In such a case, it is most conveniently employed in a shredded or crumb form and is added directly, with stirring, over a period of time to component (B), with heating, as needed, to prepare a homogeneous or a uniform heterogeneous mixture.

As component (A) is a thermoplastic elastomer, the ingredients are blended together with heating and stirring until the thermoplastic resin is melted and dissolved into solution. Typically, heating to about 120 to about 150°C, then holding at that temperature for 1-2 hours is sufficient to make a homogeneous mixture.

The compositions of this invention are useful as corrosion-resistant coatings for metal (e.g., ferrous metal, galvanized, aluminum or magnesium) surfaces, especially in the nature of undercoats for automotive bodies, coatings for structural members such as automotive frames, and the like. They may be employed as such alone, in combination with other basic metal sulfonates and the like known to be useful in corrosion-resistant coatings, and/or in combination with known adjuvants for such corrosion-resistant coatings such as acidic phosphate esters, resins, and waxes. Many of the suitable resins and waxes are the same as those described hereinabove with reference to component (B-4); they may be incorporated in varying amounts in the thickened complex but generally comprise a minor amount of the coating composition. U.S. Patent numbers 3,453,124 and 3,671,072 disclose basic compositions and adjuvants useful in combination with the compositions of this invention.

As mentioned, when other relatively inert components such as component (B-4), described hereinabove, are used, they can be incorporated as part of component (B), or may be present as, for example, a diluent for component (B). Often, they are incorporated into the blend of components (A) and (B) as an additional ingredient. When the adjuvant is a reactive material such as the acidic phosphate esters, the adjuvant is advantageously added as a separate ingredient along with components (A) and (B).

The relative amounts of components (A) and (B) employed in the compositions of this invention are sufficient to prepare compositions which, when used to coat metals, provide a coating which has good handleability and good resistance to abrasion and impact. Generally, component (A) is used at about 0.25% to about 25% by weight, often up to about 10%, more often from about 4% to about 7% by weight of the total composition. More than 25% by weight of component (A) may be used, but no significant benefit is normally obtained by using such a large amount. The balance of the composition comprises component (B) and other ingredients which may be present. When other components are present, component (B) is often present in amounts ranging from about 10% to about 70%, more often from about 20% to about 40% by weight of the total composition. As mentioned hereinabove, other components such as waxes often are used with the compositions of this invention to provide improved performance.

The following examples illustrate compositions of this invention.

### Example A

A hot-melt coating composition is prepared by mixing for one hour at 120-150°C, 630 parts of the composition of Example 12, 180 parts of a synthetic high-melting wax which is a mixture of saturated, straight chain hydrocarbons having an average molecular weight of about 750 (Paraflint H-1, Moore & Munger Marketing), and 90 parts of Elvax® 210, a thermoplastic elastomer which is a copolymer of ethylene and vinyl acetate (28% by weight vinyl acetate). Elvax® 210 is supplied by the DuPont Company. To this mixture is incorporated 100 additional parts of Paraflint H-1.

### Example B

To a stainless steel beaker is added 1916 parts of the composition of Example 12. After heating the material to 120°C, there is added 750 parts blend oil. The components are blended followed by the addition of 1250 parts Paraflint H-1 wax over 2 hours, with mixing. To this mixture is added over 25 minutes, 250 parts Kraton® G1652, a triblock copolymer with polystyrene end blocks and a Poly(ethylene-butylene) midblock, marketed by Shell Chemical Co. The temperature is increased to 130°C during the addition, and to 143°C over 0.5 hours after addition is completed. The mixture is held for 0.5 hours at 143°C. The materials are then cooled until used.

### Example C

A charge of 460 parts of the product of Example 12, 300 parts of Paraflint H-1 wax and 180 parts of blend oil is heated, with mixing, to 108°C, then to 130°C over 0.3 hours. To this mixture is added, over 0.7 hours, 60 parts of Kraton G1726X, a thermoplastic elastomer supplied by the Shell Chemical Co. Kraton G1726X is primarily a styrene-(ethylene-butylene) diblock polymer. The mixture is stirred with heating at 140°C for 1.25 hours to prepare a uniform mixture. To 926 parts of this mixture is added, at 140°C, 55 parts of Kraton G1726X polymer. The materials are mixed for 1.25 hours at 140°C to prepare a uniform composition. The mixture is the desired product containing about 12% by weight of polymer.

### Example D

A reactor equipped with a stirrer, thermowell, Barrett trap and condenser is charged with 19 parts MgO, 709 parts Paraflint H-1 wax, 141 parts R3635 paraffin wax, 131 parts EPAL 20+, 380 parts mineral oil, 20 parts carbon black and 10 parts Irganox 1010, a hindered phenol oxidation inhibitor supplied by Ciba-Geigy. The materials are heated to 96°C, followed by addition of 230 parts of an alkylbenzensulfonic acid. The mixture is heated and stirred at 99°C for 0.5 hours. An addition of 174 parts of MgO is added, then the materials are heated for an additional 0.5 hours. Water, 66 parts is added dropwise over one hour at 98-100°C. The mixture is heated for one hour at 99°C, then stripped by nitrogen blowing at 2 cubic feet per minute over 2.2 hours to 138°C. The mixture is then heated for 0.75 hours at 138°C; a total of 23.4 grams of water is collected. The temperature is adjusted to 127°C and 166 parts Kraton G1652 are added. The materials are heated to 143°C and held at 143-148°C for 0.75 hours until solids are dissolved. The mixture is the product.

### Example E

A blend of 444 parts of a non-Newtonian overbased and gelled calcium sulfonate, such as described in Quinn, U.S. 4,591,612, containing about 10% by weight of calcium, and having a penetration value according to ASTM-34 of 280 at 251°C, with 1376 parts of mineral oil is prepared. The material is poured through a medium paint filter. To a 1.5 liter stainless steel beaker is charged 435 parts of a product prepared in essentially the same fashion as that of Example 12 and 205 parts of the oil-gelled calcium sulfonate mixture described above. The materials are mixed at 99°C, then 200 parts of Paraflint H-1 and 100 parts of Multiwax W145A (Witco) is added and the temperature is increased to 121°C. Kraton G1652 (60 parts) is added and the temperature is increased to 143°C, and then held at 143-147°C for 0.5 hours until solids are dissolved. The resulting mixture is the product.

For corrosion-inhibiting purposes, the composition of this invention may be applied to the metal surface by any ordinary method such as brushing, spraying, dip-coating, flow-coating, roller-coating and the like, with heating if necessary (as to liquify a solid composition). The viscosity of a thickened composition may be adjusted for the particular method of application selected by adding, if necessary, a substantially inert, normally liquid organic diluent such as those disclosed hereinabove. The coated metal surface may then be dried either by exposure to air or by baking, although drying frequently takes place without a separate drying step. If the coating composition is of a suitable viscosity to allow direct application to the metal surface, typically the consistency of a No. 1 or No. 2 grease, no solvent is used and no drying procedure need be followed. A more viscous grease can be diluted to produce a less viscous grease which is suitable for application as previously noted. The film thickness is not critical although a coating of about 50-2000 mg. per square foot of surface in the case of an undercoat, and up to about 10,000 mg. per square foot in the case of a coating for frames or other structural members, is usually sufficient to provide adequate protection. Heavier coatings can be used if desired, but they normally contribute little in the way of additional protection.

The performance of the compositions of this invention are evaluated according to accepted industry standards, for example, General Motors Corporation Material Specification 9985404, entitled "Compound, corrosion preventive, hot melt, black". This and other standards describe properties required such as color, density, thermal stability, hardness (ASTM D1321), Gravelometer performance (SAE J400), etc.

## Claims

1. A hot melt composition comprising:
(A) a thermoplastic elastomer; and
(B) at least one non-carbonated hydrated metal-containing complex of:
(B-1) at least one metal-containing reagent; and
(B-2) at least one acidic organic reagent or an ester or an alkali metal or alkaline earth metal salt thereof, wherein (B-1) is in stoichiometric excess to the acidic organic reagent or ester or alkali metal or alkaline earth metal salt thereof.

2. A hot melt composition comprising
(A) a thermoplastic elastomer, and
(B) at least one non-carbonated hydrated overbased metal-containing complex prepared by heating, at a temperature above about 30°C, a mixture comprising:
(B-1) at least one metal-containing reagent selected from metal hydroxides, metal oxides, hydrated metal oxides and metal alkoxides;
(B-2) at least one acidic organic reagent comprising a carboxylic acid, a sulfonic acid, a phenol, a carbon acid, a pentavalent phosphorus acid, or an ester or alkali metal or alkaline earth metal salt of any of these, or mixtures thereof; and
(B-3) water, if necessary to convert a substantial proportion of component (B-1) to metal hydroxide or hydrated metal oxide;
the amount of water present, if any, being at least sufficient to hydrate a substantial proportion of component (B-1) calculated as metal oxide.

3. A composition of claim 1 or claim 2 wherein component (A) is present in amounts ranging from 0.25% to 10% by weight of the total composition.

4. A composition of any preceding claim wherein the elastomer comprises a block copolymer.

5. A composition of claim 4 wherein the elastomer comprises a block copolymer with hard and soft regions.

6. A composition of any preceding claim wherein the elastomer comprises a polymer substantially free of olefinic unsaturation.

7. A composition of any preceding claim wherein the metal comprises at least one of alkaline earth metals, aluminum, titanium, zinc, boron, iron and silicon.

8. A composition of claim 1 wherein component (B-2) comprises a carboxylic acid, a sulfonic acid, a phenol, a pentavalent phosphorus acid, or an ester or alkali metal or alkaline earth metal salt of any of these, or mixtures thereof.

9. A composition of any preceding claim wherein (B), the non-carbonated hydrated metal-containing complex further contains
(B-4) an organic carrier for (B-2), the acidic organic reagent.

10. A composition of any preceding claim wherein the elastomer (A) comprises at least one of
(a) copolyether-ester elastomers,
(b) olefin-ester elastomers,
(c) styrenic elastomers,
(d) olefin copolymer elastomers,
(e) diene-olefin elastomers,
(f) copolyester elastomers,
(g) polyurethane elastomers,
(h) polyether elastomers,
(i) polyester-amide elastomers,
(j) olefin-maleic anhydride elastomers,
(k) styrene-maleic anhydride elastomers, and
(l) alloy elastomers comprising at least one member of the group of elastomers (a)-(k).

11. A composition of claim 10 wherein the elastomer comprises (c), a styrenic elastomer wherein said styrenic elastomer is a block copolymer containing polymeric styrene or polymeric alpha-methyl styrene blocks separated by polymeric diene or polymeric lower-olefin blocks.

12. A composition of any preceding claim wherein the ratio of total equivalents of metal in the mixture to component (B-2), calculated as the free acid, is at least 3:1.

13. A hot melt composition comprising
(A) a thermoplastic elastomer and
(B) at least one non-carbonated overbased magnesium complex prepared by heating at a temperature within the range of 40°C to about 120°C
(B-1) magnesium oxide,
(B-2) an alkylbenzene sulfonic acid,
(B-3) water, and
(B-4) a mixture comprising at least one wax, mineral oil and a waxy alcohol mixture;
the ratio of (A) to (B) being from 3% to 7% by weight of (A) and from 97% to 93% by weight of (B); the ratio of equivalents of (B-1) to (B-2), wherein (B-2) is calculated as free acid, being between 5:1 to 25:1, the ratio of (B-3) to B-1) being between 0.7:1 and 3.0:1, and the weight ratio of component (B-4) to component (B-2) being at least about 0.5:1.

14. A metal object coated with a hot melt composition in accordance with any preceding claim.

15. A method of coating a metal surface to retard corrosion thereof which comprises dipping the metal surface to be protected into a liquid hot-melt composition of any one of claims 1 to 13.

16. A method of coating a metal surface to retard corrosion thereof which comprises flooding a liquid hot melt composition of any one of claims 1 to 13 onto the metal surface.

## Patentansprüche

1. Schmelzmassenzusammensetzung, umfassend:
(A) ein thermoplastisches Elastomer und
(B) mindestens einen nicht mit Kohlensäure behandelten hydratisierten metallhaltigen Komplex aus
(B-1) mindestens einer metallhaltigen Verbindung und
(B-2) mindestens einer sauren organischen Verbindung oder einem Ester oder Alkali- oder Erdalkalimetallsalz davon, wobei die Komponente (B-1) in einem stöchiometrischen Überschuß zur sauren organischen Verbindung oder einem Ester oder Alkali- oder Erdalkalimetallsalz daraus vorliegt.

2. Schmelzmassenzusammensetzung, umfassend:
(A) ein thermoplastisches Elastomer und
(B) mindestens einen nicht mit Kohlensäure behandelten hydratisierten überalkalisierten metallhaltigen Komplex, hergestellt durch Erhitzen eines Gemisches auf eine Temperatur oberhalb etwa 30°C, wobei das das Gemisch umfaßt:
(B-1) mindestens eine metallhaltige Verbindung, ausgewählt aus Metallhydroxiden, Metalloxiden, hydratisierten Metalloxiden und Metallalkoxiden;
(B-2) mindestens eine saure organische Verbindung, umfassend eine Carbonsäure, eine Sulfonsäure, ein Phenol, eine kohlenstoffhaltige Säure, eine Phosphor(V)säure, oder einen Ester oder ein Alkali- oder Erdalkalimetallsalz davon, oder deren Gemische; und
(B-3) Wasser, sofern es zur Umsetzung eines wesentlichen Anteils der Komponente (B-1) zum Metallhydroxid oder hydratisierten Metalloxid notwendig ist;
wobei die vorliegende Wassermenge mindestens ausreicht zur Hydratisierung eines wesentlichen Anteils der Komponente (B-1), berechnet als Metalloxid, sofern Wasser vorliegt.

3. Zusammensetzung nach Anspruch 1 oder 2, wobei die Komponente (A) in Mengen im Bereich von 0,25 Gew.-% bis 10 Gew.-%, bezogen auf die Gesamtzusammensetzung, vorliegt.

4. Zusammensetzung nach einem der vorstehenden Ansprüche, wobei das Elastomer ein Blockcopolymer umfaßt.

5. Zusammensetzung nach Anspruch 4, wobei das Elastomer ein Blockcopolymer mit harten und weichen Bereichen umfaßt.

6. Zusammensetzung nach einem der vorstehenden Ansprüche, wobei das Elastomer ein im wesentlichen nicht olefinisch ungesättigtes Polymer ist.

7. Zusammensetzung nach einem der vorstehenden Ansprüche, wobei das Metall mindestens ein Metall aus der Gruppe der Erdalkalimetalle, Aluminium, Titan, Zink, Bor, Eisen und Silicium umfaßt.

8. Zusammensetzung nach Anspruch 1, wobei die Komponente (B-2) eine Carbonsäure, eine Sulfonsäure, ein Phenol, eine Phosphor(V)säure, oder einen Ester oder ein Alkali- oder Erdalkalimetallsalz davon, oder deren Gemische umfaßt.

9. Zusammensetzung nach einem der vorstehenden Ansprüche, wobei die Komponente (B), der nicht mit Kohlensäure behandelte hydratisierte metallhaltige Komplex, zusätzlich eine organische Trägersubstanz (B-4) für die saure organische Komponente (B-2) enthält.

10. Zusammensetzung nach einem der vorstehenden Ansprüche, wobei das Elastomer (A) mindestens ein Elastomer umfaßt, ausgewählt aus
(a) Copolyether-Ester-Elastomeren,
(b) Olefinester-Elastomeren,
(c) Styrolartige Grundbausteine-enthaltenden Elastomeren
(d) Olefincopolymer-Elastomeren,
(e) Dienolefin-Elastomeren,
(f) Copolyester-Elastomeren,
(g) Polyurethan-Elastomeren,
(h) Polyether-Elastomeren,
(i) Polyesteramid-Elastomeren,
(j) Olefin-Maleinsäureanhydrid-Elastomeren
(k) Styrol-Maleinsäureanhydrid-Elastomeren, und
(l) Misch-Elastomeren, die mindestens ein Elastomer aus der Gruppe der Elastomere (a)-(k) umfassen.

11. Zusammensetzung nach Anspruch 10, wobei das Elastomer ein styrolartige Grundbausteine-enthaltendes Elastomer (c) umfaßt, wobei das styrolartige Grundbausteine-enthaltende Elastomer (c) ein Blockcopolymer mit Styrolpolymerblöcken oder alpha-Methylstyrolpolymerblöcken, unterbrochen durch Dienpolymerblöcke oder niedere-Olefinpolymerblöcke, ist.

12. Zusammensetzung nach einem der vorstehenden Ansprüche, wobei das Verhältnis der Gesamtäquivalente des Metalls im Gemisch zur Komponente (B-2), berechnet als freie Säure, mindestens 3:1 beträgt.

13. Schmelzmassenzusammensetzung, umfassend:
(A) ein thermoplastisches Elastomer und
(B) mindestens einen nicht mit Kohlensäure behandelten überalkalisierten Magnesiumkomplex, hergestellt durch Erhitzen von
(B-1) Magnesiumoxid,
(B-2) einer Alkylbenzolsulfonsäure,
(B-3) Wasser, und
(B-4) einem Gemisch, umfassend mindestens ein Wachs, Mineralöl und ein wachsartiges Alkoholgemisch
auf eine Temperatur im Bereich von 40°C bis etwa 120°C, wobei das Verhältnis von Komponente (A) zu Komponente (B) von 3 Gew.-% bis 7 Gew.-% bezogen auf Komponente (A) und von 97 Gew.-% bis 93 Gew.-% bezogen auf Komponente (B) beträgt; das Verhältnis der Äquivalente von Komponente (B-1) zu Komponente (B-2) von 5:1 bis 25:1, das Verhältnis von Komponente (B-3) zu Komponente (B-1) von 0,7:1 bis 3,0:1 und das Gewichtsverhältnis von Komponente (B-4) zu Komponente (B-2) mindestens etwa 0,5:1 beträgt.

14. Mit einer Schmelzmassenzusammensetzung nach einem der vorstehenden Ansprüche beschichteter Metallgegenstand.

15. Verfahren zur Beschichtung einer Metalloberfläche zur Korrosionsverzögerung, umfassend das Eintauchen der zu schützenden Metalloberfläche in eine flüssige Schmelzmassenzusammensetzung nach einem der Ansprüche 1 bis 13.

16. Verfahren zur Beschichtung einer Metalloberfläche zur Korrosionsverzögerung, umfassend die Flutung (Beschichtung) der Metalloberfläche mit einer flüssigen Schmelzmassenzusammensetzung nach einem der Ansprüche 1 bis 13.

## Revendications

1. Composition thermofusible, comprenant :
(A) un élastomère thermoplastique ; et
(B) au moins un complexe de métal hydraté et non carbonaté, dérivé :
(B-1) d'au moins un réactif dérivé de métal ; et
(B-2) d'au moins un réactif organique acide, ou d'un ester ou d'un sel dérivé de métal alcalin ou de métal alcalino-terreux de celui-ci, dans lequel (B-1) est en excès par rapport à la stoechiométrie, eu égard au réactif organique acide ou à un ester ou un sel dérivé de métal alcalin ou de métal alcalino-terreux de celui-ci.

2. Composition thermofusible, comprenant :
(A) un élastomère thermoplastique ; et
(B) au moins un complexe de métal suralcalinisé, hydraté et non carbonaté, préparé en chauffant, à une température supérieure à environ 30 °C, un mélange comprenant :
(B-1) au moins un réactif dérivé de métal choisi parmi les hydroxydes de métal, les oxydes de métal, les oxydes de métal hydratés et les alcoolates de métal ;
(B-2) au moins un réactif organique acide comprenant un acide carboxylique, un acide sulfonique, un phénol, un acide carboné, un acide dérivé du phosphore pentavalent, ou un ester ou un sel dérivé de métal alcalin ou de métal alcalino-terreux de l'un quelconque de ceux-ci, ou des mélanges de ceux-ci, et
(B-3) de l'eau, si cela est nécessaire pour convertir une proportion notable du composant (B-1) en un hydroxyde de métal ou un oxyde de métal hydraté ;
la quantité d'eau présente, s'il en est, étant au moins suffisante pour hydrater une proportion notable du composant (B-1) d'après calcul sous la forme d'oxyde de métal.

3. Composition selon la revendication 1 ou 2, dans laquelle le composant (A) est présent selon des quantités variant de 0,25 % à 10 % en poids par rapport à la composition totale.

4. Composition selon l'une quelconque des revendications précédentes, dans laquelle l'élastomère comprend un copolymère séquencé.

5. Composition selon la revendication 4, dans laquelle l'élastomère comprend un copolymère séquencé avec des régions dures et molles.

6. Composition selon l'une quelconque des revendications précédentes, dans laquelle l'élastomère comprend un polymère exempt d'insaturation oléfinique.

7. Composition selon l'une quelconque des revendications précédentes, dans laquelle le métal comprend au moins un élément choisi parmi les métaux alcalino-terreux, l'aluminium, le titane, le zinc, le bore, le fer et le silicium.

8. Composition selon la revendication 1, dans laquelle le composé (B-2) comprend un acide carboxylique, un acide sulfonique, un phénol, un acide dérivé du phosphore pentavalent, ou un ester ou un sel dérivé de métal alcalin ou de métal alcalino-terreux de l'un de ceux-ci, ou des mélanges de ceux-ci.

9. Composition selon l'une quelconque des revendications précédentes, dans laquelle (B), le complexe de métal hydraté et non carbonaté, contient en outre :
(B-4) un véhicule organique pour le réactif organique acide (B-2).

10. Composition selon l'une quelconque des revendications précédentes, dans laquelle l'élastomère (A) comprend au moins l'un des composants suivants :
(a) des élastomères de copolyéther-ester,
(b) des élastomères d'oléfine-ester,
(c) des élastomères styréniques,
(d) des élastomères de copolymère oléfinique,
(e) des élastomères de diène-oléfine,
(f) des élastomères de copolyester,
(g) des élastomères de polyuréthanne,
(h) des élastomères de polyéther,
(i) des élastomères de polyester-amide,
(j) des élastomères d'oléfine-anhydride maléique,
(k) des élastomères de styrène-anhydride maléique, et
(l) des élastomères alliés comprenant au moins l'un des composants du groupe d'élastomères (a) à (k).

11. Composition selon la revendication 10, dans lequel l'élastomère comprend un élastomère styrénique (c) dans lequel l'élastomère styrénique est un copolymère séquencé contenant des séquences de polymère de styrène ou d'alpha-méthyl styrène, séparées par des séquences de polymère de diène ou d'oléfine inférieure.

12. Composition selon l'une quelconque des revendications précédentes, dans laquelle le rapport du nombre total d'équivalents de métal dans le mélange, au composant (B-2) d'après calcul sous la forme de l'acide libre, est d'au moins 3:1.

13. Composition thermofusible, comprenant :
(A) un élastomère thermoplastique, et
(B) au moins un complexe du magnésium suralcalinisé et non carbonaté, préparé par chauffage à une température de 40 °C jusqu'à environ 120 °C,
(B-1) de l'oxyde magnésium,
(B-2) un acide alkylbenzène sulfonique,
(B-3) de l'eau, et
(B-4) un mélange comprenant au moins une cire, une huile minérale et un mélange d'alcool cireux ;
le rapport du composant (A) au composant (B) étant de 3 % à 7 % en poids de (A) et de 97 % à 93 % de (B) ; le rapport en équivalents du composant (B-1) au composant (B-2), le composant (B-2) étant considéré sous forme acide libre, étant de 5:1 à 25:1, le rapport du composant (B-3) au composant (B-1) étant de 0,7:1 à 3,0:1 et le rapport pondéral du composant (B-4) au composant (B-2) étant d'au moins environ 0,5:1.

14. Objet métallique revêtu avec une composition thermofusible selon l'une quelconque des revendications précédentes.

15. Procédé du revêtement d'une surface métallique pour retarder sa corrosion, selon lequel on immerge la surface métallique destinée à être protégée, dans une composition liquide thermofusible selon l'une quelconque des revendications 1 à 13.

16. Procédé de revêtement d'une surface métallique pour retarder sa corrosion, selon lequel on projette une composition thermofusible liquide selon l'une quelconque des revendications 1 à 13, sur la surface métallique.
